(19) Europäisches Patentamt
European Patent Office
Office européen des brevets

(11) **EP 2 178 267 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
***H04L 29/08*** *(2006.01)*

(21) Anmeldenummer: **09013007.1**

(22) Anmeldetag: **14.10.2009**

(54) **Verfahren zur Ausführung von Diensten in einem dezentralen Datennetz**

Method for providing services in a decentralised data network

Procédé d'exécution de services dans un réseau de données décentralisé

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.10.2008 EP 08018344**

(43) Veröffentlichungstag der Anmeldung:
**21.04.2010 Patentblatt 2010/16**

(73) Patentinhaber: **SIEMENS AKTIENGESELLSCHAFT**
**80333 München (DE)**

(72) Erfinder:
• **Bartland, Udo**
**90574 Roßtal (DE)**
• **Gerdes, Christoph**
**81667 München (DE)**

(56) Entgegenhaltungen:
**EP-A1- 1 926 284    WO-A2-2008/012301**

• **EVREN AYORAK ET AL: "Super Peer Web Service Discovery Architecture" DATA ENGINEERING, 2007. ICDE 2007. IEEE 23RD INTERNATIONAL CONFERENCE ON, IEEE, PI, 1. April 2007 (2007-04-01), Seiten 1360-1364, XP031095896 ISBN: 978-1-4244-0802-3**
• **BARTLANG U: "Decentralised and Reliable Service Infrastructure to Enable Corporate Cloud Computing" WORKSHOP ECHALLENGES E-2008, 23. Oktober 2008 (2008-10-23), Seite 1, XP002571208 Gefunden im Internet: URL:http://www.e2esu.eu/public/eChallenges _2008_Workshop_Proceedings? action=AttachFi le&do=get&target=Bartlang_ cloud_computing_ rev.pdf> [gefunden am 2010-03-03]**

**Beschreibung**

Die Erfindung betrifft ein Verfahren zur Ausführung von Diensten in einem dezentralen Datennetz sowie ein entsprechendes dezentrales Datennetz.

Aus dem Stand der Technik sind Verfahren bekannt, mit denen Rechenprozesse in der Form von Diensten in einer verteilten Infrastruktur aus einer Mehrzahl von Rechnern ausgeführt werden. Solche Infrastrukturen sind in der Regel nur schwer an variierende Anforderungen in Bezug auf die auszuführenden Dienste anpassbar. Darüber hinaus ist ein großer Administrationsaufwand zur Verwaltung der verteilten Ausführung von Diensten erforderlich.

Darüber hinaus schlägt Evren Ayorate und dr. Ayse Basar Bener in "Super Peer Web Service Discovery Architecture", ICDE 2007, 1. April 2007, XP 03 109 5896, eine verteilte Peer-to-Peer Web Service Discovery Architektur vor.

Aufgabe der Erfindung ist es deshalb, ein Verfahren zu schaffen, mit dem in einem Datennetz eine einfache und flexibel anpassbare verteilte Ausführung von Diensten ermöglicht wird.

Diese Aufgabe wird durch die unabhängigen Patentansprüche gelöst. Weiterbildungen der Erfindung sind in den abhängigen Ansprüchen definiert.

Das erfindungsgemäße Verfahren verwendet zur Dienste-Ausführung ein dezentrales Datennetz, bei dem die einzelnen Netzknoten gleichberechtigt sind, d.h. es gibt in dem Datennetz keine zentrale Instanz, welche die Netzknoten in dem Datennetz verwaltet. Das Datennetz ist dabei insbesondere ein Peer-to-Peer-Netz, wobei beliebige, aus dem Stand der Technik bekannte Peer-to-Peer-Protokolle zur Bildung der Netzstruktur eingesetzt werden können. In einer besonders bevorzugten Variante wird das aus dem Stand der Technik bekannte Chord-Protokoll verwendet.

In dem erfindungsgemäßen Verfahren werden Ressourcen-Informationen über eine erste Gruppe von ersten Netzknoten durch eine zweite Gruppe von zweiten Netzknoten bereitgestellt, wobei die Ressourcen-Informationen die in den jeweiligen ersten Netzknoten verfügbaren Ressourcen zur Ausführung von Diensten spezifizieren. Der Begriff der Ressource ist dabei weit zu verstehen und Ressourcen-Informationen können beliebige Spezifikationen der jeweiligen ersten Netzknoten umfassen, welche für die Ausführung von Diensten relevant sind. Insbesondere betreffen Ressourcen statische oder dynamische Parameter der jeweiligen Netzknoten, wie z.B. verfügbaren Speicherplatz und/oder verfügbare Rechenleistung und/oder verfügbare Daten und/oder verfügbare Programme.

In dem erfindungsgemäßen Verfahren wird eine an das Datennetz gerichtete Dienste-Spezifikation, welche eine oder mehrere auszuführende Dienste festlegt, innerhalb der zweiten Gruppe von zweiten Netzknoten derart verarbeitet, dass basierend auf den Ressourcen-Informationen eine Dienstegruppe umfassend zumindest einen ersten Netzknoten zur Ausführung des oder der Dienste gemäß der Dienste-Spezifikation ausgewählt wird. Anschließend wird an die ausgewählte Dienstegruppe die Dienste-Spezifikation übergeben und der oder die Dienste gemäß der Dienste-Spezifikation werden durch die Dienstegruppe ausgeführt. Eine Dienste-Spezifikation kann dabei beliebige Informationen in Bezug auf die Ausführung eines oder mehrerer Dienste und damit festgelegter Kriterien enthalten. Wie weiter unten erwähnt, können aus dem Stand der Technik bekannte Sprachen, beispielsweise in der Form von Datenbank-Abfragesprachen, verwendet werden, um den Dienst und damit verbundene Kriterien gemäß der Dienste-Spezifikation festzulegen. Unter bestimmten Umständen kann in dem erfindungsgemäßen Verfahren der Fall auftreten, dass keine geeignete Dienstegruppe gefunden wird und somit keine Dienstegruppe ausgewählt werden kann. In diesem Fall wird das Verfahren beendet und gegebenenfalls eine Meldung ausgegeben, dass die Ausführung des oder der Dienste gemäß der Dienste-Spezifikation in dem Datennetz nicht möglich ist.

Das erfindungsgemäße Verfahren zeichnet sich dadurch aus, dass in einem dezentralen Datennetz die Verarbeitung von Diensten auf eine erste Gruppe von ersten Netzknoten und eine zweite Gruppe von zweiten Netzknoten aufgeteilt wird. Die erste Gruppe von ersten Netzknoten dient dabei zur Ausführung der Dienste und kann basierend auf einem einfachen Peer-to-Peer-Protokoll verwaltet werden, denn sie muss keine komplexen Suchanfragen verarbeiten. Demgegenüber übernimmt die zweite Gruppe von zweiten Netzknoten nicht die Ausführung von Diensten, sondern ist speziell für die Auswahl von die Dienste ausführenden Netzknoten in Abhängigkeit von der Dienste-Spezifikation und den hinterlegten Ressourcen-Informationen vorgesehen. Dabei können die zweiten Netzknoten speziell angepasst sein, um komplexe Anfragen basierend auf Dienste-Spezifikationen zu verarbeiten bzw. Ressourcen-Informationen effizient in der zweiten Gruppe zu verteilen.

Durch die Verwendung von zwei Gruppen von Netzknoten, welche beide zu dem gleichen dezentralen Datennetz gehören, wird somit eine einfache und flexible Verarbeitung von Diensten geschaffen, wobei durch die Implementierung entsprechender Mechanismen selbst komplexe Anfragen nach Diensten verarbeitet werden können. Ebenso können durch die Erweiterung der ersten Gruppe um neue Netzknoten, welche in dezentralen Datennetzen problemlos durchführbar ist, auch aufwändige Rechenprozesse durchgeführt werden.

In einer besonders bevorzugten Ausführungsform werden die Ressourcen-Informationen innerhalb der zweiten Gruppe in einer oder mehreren Datenbanken abgelegt, wobei über eine Datenbank-Abfrage die an das Datennetz gerichtete Dienste-Spezifikation verarbeitet wird. Durch die Verwendung entsprechender, an sich aus dem Stand der Technik bekannter Datenbank-Abfragesprachen können hierdurch auch komplizierte Dienste-Spezifikationen mit einer Vielzahl von unterschiedlichen Kriterien im Hinblick auf die Ausführung der Dienste verarbeitet werden. Dabei besteht die Möglichkeit, dass jeder zweite Netzknoten eine Datenbank mit Ressourcen-Informationen zu allen ersten Netzknoten enthält. Gegebenenfalls kann auch eine verteilte Datenbank eingesetzt werden, welche die Ressourcen-Informationen mit geeigneten Algorithmen auf die zweiten Netzknoten der zweiten Gruppe verteilt. In einer bevorzugten Ausführungsform wird als Datenbank eine Peer-to-Peer-Datenbank verwendet. Peer-to-Peer-Datenbanken sind dem Fachmann geläufig. Es handelt sich hierbei um lose gekoppelte, hoch verteilte Datenverwaltungssysteme, an denen eine Vielzahl von Rechnern beteiligt ist.

In einer besonders bevorzugten Ausführungsform umfasst die Dienste-Spezifikation eine Beschreibung der durch den oder die Dienste durchzuführenden Aufgabe und einen Regelsatz, der eine oder mehrere Anforderungen an die zur Ausführung des oder der Dienste zu verwendenden Dienstegruppe enthält. Dieser Regelsatz kann beliebig ausgestaltet sein und verschiedene Kriterien festlegen. In einer Variante der Erfindung umfasst ein Kriterium des Regelsatzes das Kriterium, dass die Ausführung des oder der Dienste wenig Energie verbraucht. Dieses Kriterium kann dabei derart umgesetzt werden, dass bei der Ausführung des oder der Dienste erste Netzknoten mit physikalisch entfernt voneinander angeordneter Hardware und/oder erste Netzknoten mit geringem Energieverbrauch (d.h. mit gutem Energiemanagement) bevorzugt verwendet werden.

In einer einfachen Ausführungsform der Erfindung umfasst die Dienstegruppe zur Ausführung des oder der Dienste lediglich einen einzelnen ersten Netzknoten. In einer besonders bevorzugten Variante der Erfindung umfasst die ausgewählte Dienstegruppe jedoch mehrere erste Netzknoten, welche zumindest einen Koordinator-Knoten zur Koordinierung der Ausführung des oder der Dienste gemäß der Dienste-Spezifikation und zumindest einen ausführenden Netzknoten zur Ausführung des oder der Dienste gemäß der Dienste-Spezifikation beinhalten. Auf diese Weise kann eine effiziente Ausführung auch von komplexen Diensten erreicht werden.

In einer weiteren Variante der Erfindung umfasst die ausgewählte Dienstegruppe neben dem zumindest einen Koordinator-Knoten und dem zumindest einen ausführenden Netzknoten zumindest einen Überwachungsknoten, der die Ausführung des oder der Dienste überwacht und die Aufgabe eines Koordinator-Knotens oder eines ausführenden Netzknotens übernehmen kann, insbesondere bei Ausfall eines Koordinator-Knotens oder eines ausführenden Netzknotens. Hierdurch kann die Verlässlichkeit der Ausführung der Dienste in dem Datennetz deutlich erhöht werden, da bei Ausfall eines Knotens in der Dienstegruppe dessen Aufgabe durch den Überwachungsknoten übernommen werden kann.

Um eine schnelle Migration eines oder mehrerer Dienste auf einen Überwachungsknoten zu erreichen, werden in einer besonders bevorzugten Ausführungsform in dem zumindest einen Überwachungsknoten in regelmäßigen Abständen der aktuelle Rechenzustand (d.h. der Ausführungszustand des oder der Dienste) des zumindest einen Koordinatenknotens und/oder des zumindest einen ausführenden Netzknotens hinterlegt. Es kann somit auf einfache Weise der Zustand des entsprechenden Netzknotens bei dessen Ausfall durch denjenigen Überwachungsknoten wiederhergestellt werden, der die Aufgabe des ausgefallenen Knotens übernimmt.

In einer weiteren, besonders bevorzugten Ausführungsform ist die Dienstegruppe bei der Ausführung des oder der Dienste gemäß der Dienste-Spezifikation basierend auf einem oder mehreren Kriterien dynamisch veränderbar, wobei insbesondere die Ausführung eines Dienstes von einem ausführenden Netzknoten auf einen anderen Netzknoten übertragen wird, wenn der andere Netzknoten gemäß dem oder den Kriterien besser zur Ausführung des Dienstes geeignet ist. Durch diese dynamische Anpassung der Dienstegruppe kann die Ausführung der Dienste in bestimmten Fällen weiter beschleunigt werden. Die Kriterien, unter welchen Bedingungen die Dienstegruppe verändert wird, können dabei beliebig festgelegt sein. Beispielsweise kann ein Ersatz eines ausführenden Netzknotens durch einen anderen Netzknoten erfolgen, wenn die verfügbare Rechenleistung des anderen Netzknotens um ein vorbestimmtes Maß größer ist als die Rechenleistung des aktuell den Dienst ausführenden Netzknotens.

Um eine effiziente Verteilung der Ressourcen-Informationen in der zweiten Gruppe der zweiten Netzknoten zu erreichen, wird in einer bevorzugten Ausführungsform ein geeignetes Protokoll verwendet. Insbesondere kann dabei ein auf Gossip basierendes Protokoll verwendet werden, wobei die Gossip-Methode hinlänglich aus dem Stand der Technik bekannt ist. In einer Variante der Erfindung wird das in dem Dokument [1] beschriebene Protokoll eingesetzt.

Die Dienste-Spezifikation kann an die zweite Gruppe von zweiten Netzknoten über eine beliebige Schnittstelle übergeben werden. In einer besonders bevorzugten Variante wird dabei eine Web-Service-Schnittstelle eingesetzt.

In einer weiteren, bevorzugten Ausführungsform der Erfindung lädt ein zur Ausführung eines Dienstes in der ausgewählten Dienstegruppe bestimmter Netzknoten Software-Code zur Ausführung des Dienstes von einem anderen Netzknoten, falls der zur Ausführung bestimmte Netzknoten keinen Software-Code zur Ausführung des Dienstes enthält. Auf diese Weise kann ein zur Ausführung eines Dienstes besonders geeigneter Netzknoten auch unabhängig davon ausgewählt werden, ob auf diesem Netzknoten bereits der Software-Code zur Dienste-Ausführung hinterlegt ist. Aus dem Stand der Technik sind dabei entsprechende Verfahren bekannt, wie dezentral und dynamisch Software-Code auf einen Netzknoten geladen werden kann (siehe z.B. Dokument [2]).

Die in dem erfindungsgemäßen Verfahren ausgeführten Dienste können gegebenenfalls basierend auf einem vorgegebenen Standard beruhen. In einer bevorzugten Variante stellen die im Datennetz ausgeführten Dienste dabei sog. OSGi-Services dar (OSGi = Open Services Gateway Initiative).

Neben dem oben beschriebenen Verfahren betrifft die Erfindung ferner ein dezentrales Datennetz zur Ausführung von Diensten, umfassend eine Vielzahl von Netzknoten, wobei eine erste Gruppe von ersten Netzknoten und eine zweite Gruppe von zweiten Netzknoten vorgesehen ist, welche derart ausgestaltet sind, dass jede Variante des oben beschriebenen Verfahrens in dem Datennetz durchführbar ist.

Ausführungsbeispiele der Erfindung werden nachfolgend anhand der beigefügten Figuren detailliert beschrieben.

Es zeigen:

Fig. 1 eine schematische Darstellung einer Ausführungsform eines Peer-to-Peer-Netzes, in dem das erfindungsgemäße Verfahren durchführbar ist;

Fig. 2 eine schematische Darstellung des Ablaufs einer Ausführungsform des erfindungsgemäßen Verfahrens in dem Peer-to-Peer-Netz der Fig. 1; und

Fig. 3 ein Diagramm, welches die Ergebnisse einer basie-rend auf dem erfindungsgemäßen Verfahren durchgeführten Simulation zeigt.

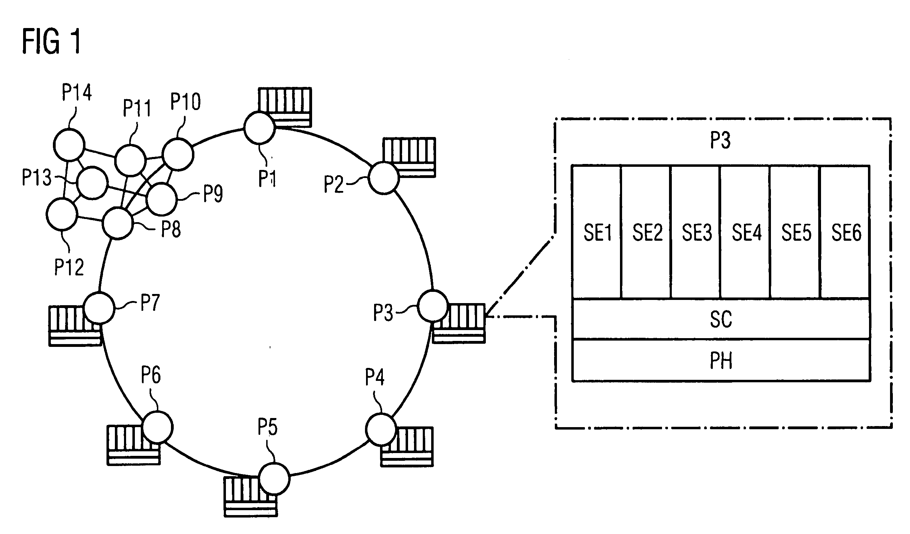

Im Folgenden wird anhand von Fig. 1 ein Beispiel eines Peer-to-Peer-Netzes beschrieben, in dem das erfindungsgemäße Verfahren durchführbar ist. Das Netz der Fig. 1 beruht dabei auf dem hinlänglich aus dem Stand der Technik bekannten Chord-Protokoll, bei dem die einzelnen Netzknoten, welche im Folgenden auch als Peers bezeichnet werden, auf einem logischen Ring angeordnet sind. Dabei verwaltet jeder Peer über eine verteilte Hash-Tabelle, welche auch als DHT (Distributed Hash Table) bezeichnet wird, ein Werteintervall innerhalb eines Hash-Wertebereichs. Gemäß der Ausführungsform der Fig. 1 existiert eine Gruppe von ersten Peers P1, P2, ..., P7, welche zur Ausführung von Diensten in dem Peer-to-Peer-Netz vorgesehen sind. Darüber hinaus existiert eine Gruppe von zweiten Peers P8, P9, ..., P14, welche ebenfalls auf dem Ring angeordnet sind, wobei die Anordnung auf dem Ring aus Übersichtlichkeitsgründen nicht für alle Peers P8 bis P14 wiedergegeben ist. Da die Peers P1 bis P7 zur Ausführung von Diensten vorgesehen sind, werden sie im Folgenden auch als Service-Peers bezeichnet.

Im Unterschied zu den Service-Peers stellen die Peers P8 bis P14 sog. Index-Peers dar, deren Aufgabe nicht in der Ausführung von Diensten besteht, sondern in der Verwaltung entsprechender Informationen betreffend die verfügbaren Ressourcen der jeweiligen Service-Peers P1 bis P7. Der Begriff der Ressource ist dabei weit zu verstehen und betrifft insbesondere die auf den einzelnen Peers verfügbaren Hardware- und/oder Software-Ressourcen, z.B. auf den Peers verfügbarer Speicherplatz, verfügbare Rechenleistung, verfügbare Programme und/oder Daten. Der Grund für die Verwendung von Index-Peers liegt darin, dass über die DHT-Tabelle nur basierend auf einfachen Anfragen mittels entsprechender Schlüsselwörter, welche auf dem Hash-Wertebereich abgebildet werden, nach Ressourcen gesucht werden kann. Demzufolge können komplexe Anfragen, wie z.B. semantische oder Bereichs-Anfragen, über große Datensätze hinweg nicht bzw. nur sehr schlecht allein über die Peers P1 bis P7 verarbeitet werden. Deshalb werden die Index-Peers verwendet, welche eine spezielle Gruppe von Peers darstellen, welche Informationen bezüglich der Ressourcen der Service-Peers in der Form von Metadaten und entsprechenden Statusinformationen derart bereitstellen, dass auch komplexe Anfragen verarbeitet werden können. Hierdurch wird eine Plattform ermöglicht, die in der Lage ist, effizient für einen auszuführenden Dienst die aktuell am besten geeigneten Peers zu bestimmen, z.B. Peers, welche bestimmten Fähigkeiten aufweisen bzw. inaktive Hardware-Ressourcen enthalten.

Die Index-Peers stellen somit verbesserte Anfrage-Schnittstellen zur Verfügung, um hierdurch auch bei komplexen Anfragen einen internen Auswahlprozess für die zur Dienste-Ausführung zu verwendenden Peers zu gewährleisten. Um die Verarbeitungsgeschwindigkeit von Anfragen zu erhöhen, enthalten die Index-Peers der Fig. 1 einen separaten Pool von Verbindungen zu anderen Index-Peers. Diese zusätzlichen Verbindungen gehen über die üblichen Verbindungen auf dem Chord-Ring hinaus. Die Verwaltung und Verteilung von Ressourcen-Informationen in der Gruppe der Index-Peers wird dabei mit einem separaten Protokoll gewährleistet, wobei in der Ausführungsform der Fig. 1 ein auf Gossip basierendes Protokoll verwendet wird, mit dem effizient und schnell Informationen zwischen den Peers verteilt und ausgetauscht werden können. Dieses Protokoll wird in der Druckschrift [1] beschrieben.

Die Service-Peers P1 bis P7 des Netzes der Fig. 1 machen ihre jeweiligen Ressourcen zur Ausführung von Diensten in dem Netz bekannt. Diese Informationen werden dann in geeigneter Weise in der Gruppe der Index-Peers verteilt und für Anfragen genutzt, wie weiter unten beschrieben wird. Jeder Service-Peer beinhaltet in der Ausführungsform der Fig. 1 einen sog. OSGi-Service-Container, wobei die OSGi-Plattform zur Ausführung von Diensten hinlänglich aus dem Stand der Technik bekannt ist. Die Bereitstellung von Diensten im Rahmen eines OSGi-Service-Containers ist in Fig. 1 am Beispiel des Peers P3 verdeutlicht. Dabei enthält die Plattform PH (PH = Peer Host) des Peers P3 den OSGi-Service-Container SC, in dem eine Mehrzahl von Diensten SE1, SE2, ..., SE6 enthalten ist. Die Dienste SE1 bis SE4 können beliebig ausgestaltet sein und sind in Fig. 1 Standard-Dienste innerhalb des Service-Containers SC. Dabei betrifft SE1 einen Kommunikations-Dienst, SE2 einen Scheduling-Dienst, SE3 einen Datenspeicher-Dienst und SE4 einen Dienst zur Verwaltung der Dienste-Ausführung. Durch die Dienste SE5 und SE6 werden Dienste spezifiziert, welche dynamisch während der Laufzeit durch den Peer in den Service-Container integriert werden, indem sie beispielsweise von anderen Peers geladen werden.

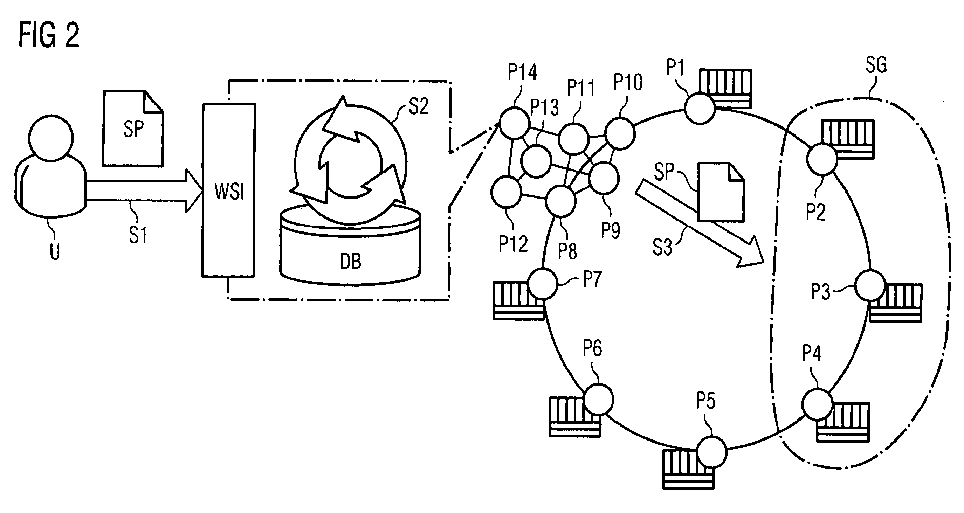

Fig. 2 verdeutlicht am Beispiel des Peer-to-Peer-Netzes der Fig. 1 die Dienste-Ausführung basierend auf einem Ausführungsbeispiel der Erfindung. In einem durch einen entsprechenden Pfeil angedeuteten Schritt S1 wird über einen Rechner eines Benutzers U eine Anfrage zur Ausführung eines oder mehrerer Dienste an das Peer-to-Peer-Netz gerichtet. Dies geschieht dadurch, dass eine Dienste-Spezifikation SP über eine Web-Service-Schnittstelle WSI des Index-Peers P14 in die Gruppe der Index-Peers P8 bis P14 eingespeist wird. Die Dienste-Spezifikation enthält dabei eine Beschreibung der durchzuführenden Aufgabe des oder der angefragten Dienste zusammen mit einem Satz von Regeln, welche nicht-funktionale Anforderungen an die Dienste-Ausführung, beispielsweise hierfür benötigte Ressourcen oder Kriterien im Hinblick auf einen geringen Energieverbrauch bei der Dienste-Ausführung und dergleichen, enthalten. Jeder der Index-Peers P8 bis P14 verfügt dabei über eine Web-Service-Schnittstelle WSI, wobei die Dienste-Spezifikation über eine beliebige der Web-Service-Schnittstellen der Index-Peers eingespeist werden kann. Jeder der Index-Peers kann somit als ein Gateway zum Empfang einer entsprechenden Dienste-Spezifikation dienen.

Nach der Einspeisung der Dienste-Spezifikation SP in die Gruppe der Index-Peers löst der Index-Peer P14 einen entsprechenden Auswahlprozess zur Bestimmung möglicher Peer-Kandidaten zur Ausführung der Dienste aus. Die Auswahl entsprechender Peers kann dabei basierend auf an sich bekannten Datenbank-Abfragen erfolgen. In der Ausführungsform der Fig. 2 enthält jeder der Service-Peers eine lokale Datenbank DB, in der Ressourcen-Informationen zu allen Peers P1 bis P7 gespeichert sind, wobei im Szenario der Fig. 2 auf die lokale Datenbank des Peers P14 zurückgegriffen wird. Die Ressourcen-Informationen werden somit redundant in lokalen Datenbanken in jedem Index-Peer hinterlegt. Gegebenenfalls besteht auch die Möglichkeit, mit entsprechenden Algorithmen eine oder mehrere verteilte Datenbanken innerhalb der Gruppe der Index-Peers zu erzeugen. Die Durchführung von Abfragen und die Suche nach Informationen innerhalb von Datenbanken sind an sich aus dem Stand der Technik in einer Vielzahl von Varianten bekannt. Die konkrete Ausführung und Realisierung einer entsprechenden Datenbank und geeigneter Suchanfragen liegt somit im Rahmen von fachmännischem Handeln. Insbesondere kann dabei auf gängige Datenbanken und Abfragesprachen zur konkreten Realisierung zurückgegriffen werden.

Basierend auf der Dienste-Spezifikation SP, welche wie oben erwähnt über eine Datenbank-Abfrage formuliert sein kann, wird der Auswahlprozess basierend auf den Ressourcen-Informationen in der lokalen Datenbank DB durchgeführt, um Peers herauszufiltern, welche in der Lage sind, die entsprechende Aufgabe gemäß der Beschreibung in der Dienste-Spezifikation durchzuführen. Anschließend werden die ermittelten Kandidaten-Peers nochmals gefiltert, wobei der in der Dienste-Spezifikation enthaltene Regelsatz auf die Kandidaten-Peers angewendet wird. Die verbleibende Anzahl an Peers wird dann basierend auf einem oder mehreren Kriterien bewertet, um die für die Koordination und Ausführung des oder der Dienste gemäß der Dienste-Spezifikation am besten geeigneten Peers herauszufinden. Dabei liegt es im Rahmen von fachmännischem Handeln, entsprechende Kriterien zur Auswahl der am besten geeigneten Peers festzulegen und in dem erfindungsgemäßen Verfahren zu implementieren. Insbesondere können die besten Peer-Kandidaten basierend auf deren statischen Fähigkeiten (d.h. basierend auf der Hardware, der Netzwerkbandbreite und dergleichen), auf dem aktuellen Zustand der Peers (die momentane Last bzw. den Status anderer Ressourcen und dergleichen) sowie beliebiger zusätzlicher Kriterien bestimmt werden, wobei die Berücksichtigung dieser Kriterien bei der Auswahl des Peers in dem entsprechenden Regelsatz der Dienste-Spezifikation SP hinterlegt ist.

Die im Vorangegangenen beschriebene Auswahl geeigneter Peers zur Ausführung der entsprechenden Dienste ist in Fig. 2 durch Schritt S2 angedeutet, der in der Form von ineinander greifenden Pfeilen wiedergegeben ist. Im Beispiel der Fig. 2 wurde dabei die Anfrage und die Auswahl des geeigneten Service-Peers durch den Index-Peer P14 durchgeführt. Die Anfrage kann jedoch auch über die Web-Service-Schnittstelle eines beliebigen anderen Peers empfangen werden und dort verarbeitet werden.

In der hier beschriebenen Ausführungsform der Erfindung werden die Dienste nicht basierend auf einem einzelnen Service-Peer ausgeführt, sondern bei der Durchführung der Dienste wird immer eine Gruppe von mehreren Peers verwendet, wobei diese Gruppe immer drei Peers umfasst. Demzufolge wird nach der Auswahl der am besten zur Dienste-Ausführung geeigneten Kandidaten-Peers eine Konfiguration einer Service-Gruppe gemäß der Dienste-Spezifikation erzeugt. In dem Beispiel der Fig. 2 ist diese Service-Gruppe als SG bezeichnet und umfasst die Peers P2, P3 und P4. Dabei ist der Peer P2 ein sog. Koordinator-Peer, der die Ausführung der Dienste koordiniert. Die eigentliche Ausführung der Dienste erfolgt über den ausführenden Peer P3, wobei in anderen Varianten gegebenenfalls auch mehrere Peers zur Dienste-Ausführung vorgesehen sein können. Darüber hinaus ist der Peer P4 als Überwachungs-Peer in der Form eines sog. Watchdogs vorgesehen, wobei in anderen Varianten gegebenenfalls auch mehrere Watchdogs in der Service-Gruppe vorhanden sein können. Die Watchdogs überwachen den Koordinator-Peer und dienen als Backups, welche in regelmäßigen Abständen den Ausführungszustand der Dienste speichern, um gegebenenfalls bei Ausfall eines ausführenden Peers bzw. des Koordinator-Peers dessen Aufgaben zu übernehmen. Die Festlegung der Anzahl von ausführenden Peers bzw. Watchdogs sowie die Intervalle, in denen der Zustand der Ausführung durch die Watchdogs überwacht wird, kann beispielsweise über sog. QoS-Regeln (QoS = Quality of Service) reguliert werden.

Nach der Konfiguration der Service-Gruppe wird die Dienste-Spezifikation SP schließlich an den Koordinator-Peer P2 der Service-Gruppe SG übergeben, was in Fig. 2 durch den Schritt S3 in der Form eines Pfeils angedeutet wird. Anschließend erfolgt die Ausführung der Dienste innerhalb der Service-Gruppe SG.

In der soeben beschriebenen Ausführungsform kann unter Umständen der Fall auftreten, dass ein Peer zur Ausführung eines Dienstes ausgewählt wird, der den hierfür benötigten Software-Code in der Form eines Service-Code-Bundles oder andere Daten, welche gemäß der Dienste-Beschreibung bei der Dienste-Ausführung benötigt werden, nicht bereitstellt. In diesem Fall besteht die Möglichkeit, dass noch fehlende Informationen von anderen Service-Peers geladen werden und dynamisch in dem bereits oben beschriebenen lokalen OSGi-Container SC als Service hinterlegt werden. Entsprechende Prozesse zur Publikation, zur Suche, zur Auswahl einer Implementierung sowie zum endgültigen Laden eines Plattform-spezifischen Service-Codes sind dabei aus dem Stand der Technik bekannt. Beispielsweise kann das Verfahren gemäß der Druckschrift [2] verwendet werden, welche das dynamische Laden von OSGi-Bundles beschreibt. Dieses Verfahren betrifft einen generischen und dezentralen Auswahlprozess, der die Identifikation des am besten geeigneten Service-Code-Bundles für eine bestimmte Plattform ermöglicht. Dabei werden drei Kategorien von Eigenschaften und Anforderungen während des Auswahlprozesses berücksichtigt, nämlich die erforderliche Schnittstelle für das Service-Code-Bundle, funktionale und nicht-funktionale Eigenschaften und Kompatibilitäts-Erfordernisse, beispielsweise die erforderliche Programmiersprache sowie die lokale Ausführungsumgebung.

Wie bereits erwähnt, wird nach der Bildung der Service-Gruppe und gegebenenfalls nach dem Laden der erforderlichen Ausführungs-Logik von einem anderen Peer, die Dienste-Spezifikation an den Koordinator-Peer übertragen, in dem die Ausführungs-Logik parametrisiert ist und demzufolge die Ausführung unter Verwendung des ausführenden Netzknotens zeitlich festgelegt werden kann. Während der Ausführung fungiert der Koordinator-Peers als Leiter der Service-Gruppe und stimmt sich mit den Watchdogs (und den Index-Peers) ab, um die Gruppe aufrecht zu erhalten. In einer bevorzugten Ausführungsform können dabei während der Laufzeit durch den Koordinator-Peer besser für die Dienste-Ausführung geeignete Peers aufgefunden werden, welche das dezentrale Netz z.B. zu einem späteren Zeitpunkt betreten haben, und der Koordinator kann dann die Dienste-Ausführung auf diese Peers übertragen.

Der oder die ausführenden Peers in einer Service-Gruppe verwenden vorzugsweise einen sog. Checkpointing-Mechanismus, um aktualisierte Ausführungszustände an die Watchdogs zu übertragen. Dabei werden die zeitlichen Intervalle zur Durchführung des Checkpointings wiederum durch eine Regel kontrolliert. Sollte ein besser geeigneter Peer gefunden werden, kann gegebenenfalls der aktuelle Ausführungszustand von dem aktuell ausführenden Peer an den neuen, besser geeigneten Peer migriert werden.

Aktuelle Prozesszustände der ausgeführten Dienste sowie deren Ergebnisse werden an den Rechner des Benutzers U entweder wiederum über die Web-Service-Schnittstelle WSI zurückgegeben oder an eine andere Stelle, welche durch den Dienst spezifiziert ist. Die Dienste-Ausführung ist beendet, falls der Dienst die spezifizierte Ausgabe erfolgreich ausgeführt hat oder ein fataler Fehler aufgetreten ist. In beiden Fällen wird die Service-Gruppe durch den Koordinator-Peer aufgelöst und die Ressourcen werden an die Peers der Index-Gruppe wieder als verfügbar gemeldet.

Bei der Ausführung der Dienste im Rahmen der Service-Gruppe hat der Koordinator-Peer eine zentrale Rolle. Falls dieser Peer während der Dienste-Ausführung ausfällt, kann die Service-Gruppe unter Umständen einen inkonsistenten Zustand einnehmen. In diesem Fall wird in der hier beschriebenen Ausführungsform ein neuer Koordinator-Peer unter den Watchdogs basierend auf einer generischen Consensus-Protokoll-Instanz ausgewählt, wobei dieses Auswahlverfahren in der Druckschrift [3] beschrieben ist. Dabei besteht die Möglichkeit, dass dieses Auswahlverfahren als Standard-Service in der Plattform der Peers hinterlegt ist. Das verwendete Verfahren ermöglicht die Sicherstellung der Konsistenz von verteiltem Konsens zwischen den Peers für verschiedene Ausfallmodelle der Peers.

Das im Vorangegangenen beschriebene erfindungsgemäße Verfahren ermöglicht die verteilte Ausführung von beliebigen Arten von Diensten. Speziell eignet sich das Verfahren beispielsweise für die Simulation von großen verteilten Systemen. Große verteilte Systeme beschreiben Prozesse, welche zwischen einer Vielzahl von beliebig gearteten Knoten ablaufen, wobei ein verteiltes System mit solchen Knoten in einem dezentralen Peer-to-Peer-Netz simuliert werden kann. Hierbei ist zu beachten, dass die (simulierten) Knoten des verteilten Systems nicht den Peers entsprechen. Vielmehr simulieren die jeweiligen Peers eine Vielzahl von Knoten in dem verteilten System.

In einer speziellen Ausführungsform wird in der oben beschriebenen Peer-to-Peer-Plattform der Dienst eines verteilten Simulators ausgeführt. Der Simulator besteht dabei aus drei wesentlichen Komponenten, nämlich dem Simulator-Code, d.h. das Programm, das die Simulation ausführt, den Simulations-Codes, d.h. das Programm, das die Simulation beschreibt, und den Simulations-Parametern, welche der oben beschriebenen Dienste-Spezifikation entsprechen. Der Simulator-Code ist dabei beispielsweise als OSGi-Service-Bundle implementiert und der Simulations-Code kann ebenfalls in einem OSGi-Bundle verpackt sein. Beispielsweise kann die Simulation in Java- oder C-Code implementiert sein. Die entsprechende Dienste-Beschreibung basierend auf den Simulations-Parametern kann beispielsweise in einer XML-formatierten Textdatei hinterlegt sein. Die Dienste-Beschreibung umfasst dabei Parameter betreffend die Anzahl von ausführenden Peers und Watchdogs, die Anzahl von simulierten Knoten und die Anzahl an durchzuführenden Simulationsläufen, Parameter in Bezug auf eine Nachverarbeitung der Ergebnisse sowie andere, für die Simulation spezifische Parameter. Gegebenenfalls können einige Simulationen Daten benötigen, welche Netzwerk-Topologien oder Transmissions-Latenzen beschreiben. Diese Informationen können z.B. unter der Verwendung eines Speicher-Dienstes oder anderer, in der Dienste-Beschreibung spezifizierter Mechanismen heruntergeladen werden.

Bei der Durchführung von Simulationen gemäß dem obigen Beispiel löst der Koordinator-Peer nach Empfang der Dienste-Spezifikation die Ausführung des verteilten Simulators aus. Während der Ausführung weist der Koordinator-Peer Aufgaben den einzelnen ausführenden Peers zu und fungiert als Aggregator für die entsprechenden Ergebnisse der Ausführung. Zusätzlich werden Ergebnisse und Status-Informationen kontinuierlich an den Benutzer zurückgegeben, wodurch eine Echtzeit-Überwachung der Simulation ermöglicht wird.

Die Performanz des im Vorangegangenen beschriebenen Verfahrens hängt insbesondere davon ab, wie gut die Dienste überwacht werden, wie schnell eine Migration eines Dienstes von einem Peer auf einem anderen ermöglicht wird und wie gut der oben beschriebene Checkpointing-Mechanismus funktioniert. Im Folgenden wird dargelegt, wie diese Faktoren die Dienste-Ausführung beeinflussen.

Hohe Verfügbarkeit der Peers bei der Dienste-Ausführung wird über den im Vorangegangenen beschriebenen Watchdog-Mechanismus erreicht. Die Anzahl von Watchdogs kann dabei in Abhängigkeit von der durch den Dienst auszuführenden Aufgabe festgelegt sein. Im Regelfall ist es ausreichend, wenn die Service-Gruppe drei Peers, umfassend einen Koordinator-Peer, einen ausführenden Peer und einen Watchdog, enthält. Geht man beispielsweise von dem realistischen Szenario aus, bei dem ein Peer im Durchschnitt eine zusammenhängende Verfügbarkeitszeit von 30 Minuten aufweist und die durchschnittliche Ausführung eines Dienstes eine Minute beträgt, so ergibt sich die Wahrscheinlichkeit P für einen Fehler bei der Dienste-Ausführung zu:

$$P = \frac{1\,\text{min}}{30\,\text{min}} = 0{,}03$$

für den Fall, dass keine Watchdogs in der Service-Gruppe verwendet werden. Wenn Watchdogs hinzugefügt werden, kann die Ausfallwahrscheinlichkeit P basierend auf folgender Formel vermindert werden:

$$P = \frac{1\,\text{min}}{30\,\text{min}} \cdot \left(\frac{1\,\text{min}}{30\,\text{min}}\right)^{k}.$$

Dabei bezeichnet k die Anzahl an Watchdogs. Man erkennt, dass eine Verfügbarkeit für eine Dienste-Ausführung von 99,999 % mit lediglich zwei Watchdogs erreicht werden kann. In den meisten Fällen ist es deshalb bei der Umsetzung der Erfindung ausreichend, wenn ein oder zwei Watchdogs eingesetzt werden. Die obige Formel geht davon aus, dass die Ausfälle von Watchdogs nicht korreliert sind. Diese Annahme ist realistisch, denn die Peers in den Service-Gruppen werden in der Regel unabhängig von ihrem physikalischen Ort zusammengesetzt.

Eine konkrete Implementierung des oben beschriebenen erfindungsgemäßen Verfahrens wurde von den Erfindern in einem Peer-to-Peer-Netz aus neun herkömmlichen PCs getestet. Als Dienst wurde dabei eine Variante des oben beschriebenen verteilten Simulators zur Simulation einer Vielzahl von Knoten verwendet. Es konnte gezeigt werden, dass in dieser konkreten Implementierung Migrationszeiten von einem ausführenden Peer auf einen anderen Peer von deutlich weniger als einer Sekunde für Zustände von der Größe von 10 Kilobyte erreicht werden, wenn die Migration aufgrund des Auffindens eines für die Dienste-Ausführung besser geeigneten Peers ausgelöst wird. Die Migrationszeiten für den Fall eines unvorhersehbaren Peer-Ausfalls sind etwas länger.

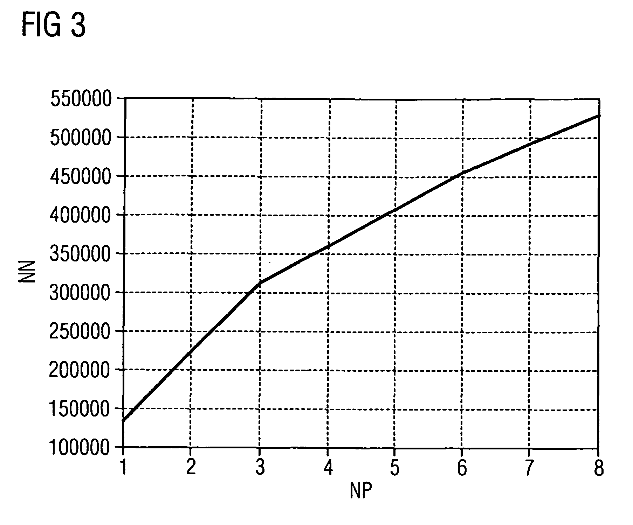

Fig. 3 zeigt für die getesteten verteilten Simulationen die Abhängigkeit der Anzahl der für die Dienste-Ausführung verwendeten Peers von der Anzahl der durch die Simulation simulierten Knoten. Entlang der Abszisse sind dabei die Anzahl NP der ausführenden Peers und entlang der Ordinate die Anzahl NN der simulierten Knoten angedeutet. Man erkennt, dass mit acht ausführenden Peers eine Simulation von 500000 Knoten erreicht wird. Man erkennt in Fig. 3 ferner, dass die Anzahl der simulierten Knoten fast linear mit der Anzahl der ausführenden Peers wächst. Fig. 3 verdeutlicht dabei, dass selbst basierend auf einem Peer-to-Peer-Netz mit geringen Hardware-Anforderungen in der Form von herkömmlichen PCs Simulationen von sehr großen verteilten Systemen gerechnet werden kann.

Das im Vorangegangenen beschriebene erfindungsgemäße Verfahren weist eine Reihe von Vorteilen auf. Insbesondere wird unter der Verwendung der Peer-to-Peer-Technologie ein flexibles und kosteneffizientes Verfahren zur Umsetzung einer verteilten Ausführung von Diensten geschaffen. Dabei können Peers für die Dienste-Ausführung auf einfache Weise hinzugefügt werden, indem ein Softwarepaket auf dem entsprechenden Rechner installiert wird, ohne dass eine weitere Konfiguration erforderlich ist. Das Verfahren ermöglicht ferner durch die Festlegung entsprechender Regelsätze innerhalb der Dienste-Spezifikation die Steuerung beliebiger Parameter während der Dienste-Ausführung. Beispielsweise kann hierdurch gesteuert werden, an welchem Ort in dem Peer-to-Peer-Netz Daten gespeichert werden oder auf Daten zugegriffen wird. Ebenso können bei der Dienste-Ausführung Kriterien im Hinblick auf Energieeffizienz umgesetzt werden, welche für die Betreiber von Datencentern von großer Wichtigkeit sind. Durch Festlegung entsprechender Regelsätze kann beispielsweise erreicht werden, dass die ausgeführten Dienste auf solchen Peers durchgeführt werden, welche eine effiziente Energieverwaltung enthalten oder welche physikalisch voneinander getrennt sind, denn hierdurch wird bei der Dienste-Ausführung weniger Wärme produziert und Energie zur Kühlung der Rechner eingespart.

Das im Vorangegangenen beschriebene Verfahren kann auf beliebigen Plattformen mit heterogener Hardware sowohl basierend auf einfachen PCs als auch auf High-End-Servern durchgeführt werden. Über den Peer-to-Peer-Mechanismus wird dabei eine dynamische Erweiterung der zur Dienste-Ausführung verwendeten Rechner durch Hinzufügung von Peers zum Netzwerk erreicht. Mit dem Verfahren können auch komplexe Kriterien zur Dienste-Ausführung schnell und effizient durch die Verwendung der oben beschriebenen Index-Peers umgesetzt werden.

Literaturverzeichnis

[1] Stephen Boyd, Arpita Ghosh, Balaji Prabhakar und Devavrat Shah: "Gossip algorithms: design, analysis and applications", in INFOCOM 2005, 24th Annual Joint Conference of the IEEE Computer and Communications Societies, 13.-17. März 2005).

[2] Rüdiger Kapitza, Holger Schmidt, Udo Bartlang und Franz J. Hauck: "A Generic Infrastructure for Decentralised Dynamic Loading of Platform-Specific Code", in Jadwiga Indulska and Kerry Raymond, editors, Distributed Applications and Interoperable Systems, Vol. 4531/2007 of LNCS, Seiten 323-336, Springer Berlin/Heidelberg, 2007.

[3] Hans P. Reiser, Udo Bartlang und Franz J. Hauck: "A Reconfigurable System Architecture for Consensus-Based Group Communication", in Si-Qing Zheng, editor, Parallel and Distributed Computing and Systems (PDCS 2005), Seiten 680-686, ACTA Press, 2005.

**Patentansprüche**

1. Verfahren zur Ausführung von Diensten in einem dezentralen Datennetz mit einer Vielzahl von Netzknoten (P1, P2, ..., P14) bei dem:

   - Ressourcen-Informationen über eine erste Gruppe von einem oder mehreren ersten Netzknoten (P1, P2, ..., P7) durch eine zweite Gruppe von einem oder mehreren zweiten Netzknoten (P8, P9, ..., P14) bereitgestellt werden, wobei die Ressourcen-Informationen die in den jeweiligen ersten Netzknoten (P1, P2, ..., P7) verfügbaren Ressourcen zur Ausführung von Diensten (SE1, SE2, ..., SE6) spezifizieren;
   - eine an das Datennetz gerichtete Dienste-Spezifikation (SP) von einem oder mehreren auszuführenden Diensten (SE1, SE2, ..., SE6) innerhalb der zweiten Gruppe von zweiten Netzknoten (P8, P9, ..., P14) derart verarbeitet wird, dass basierend auf den Ressourcen-Informationen eine Dienstegruppe (SG) umfassend zumindest einen ersten Netzknoten (P3) zur Ausführung des oder der Dienste (SE1, SE2, ..., SE6) gemäß der Dienste-Spezifikation (SP) ausgewählt wird, wobei die Dienste-Spezifikation (SP) eine Beschreibung der durch den oder die Dienste (SE1, SE2, ..., SE6) durchzuführenden Aufgabe und einen Regelsatz enthält, der eine oder mehreren Anforderungen an die zur Ausführung des oder der Dienste (SE1, SE2, ..., SE6) zu verwendende Dienstegruppe (SG) enthält;
   - an die ausgewählte Dienstegruppe (SG) die Dienste-Spezifikation (SP) übergeben wird und der oder die Dienste (SE1, SE2, ..., SE6) gemäß der Dienste-Spezifikation durch die Dienstegruppe (SG) ausgeführt werden.

2. Verfahren nach Anspruch 1, bei dem die Ressourcen-Informationen innerhalb der zweiten Gruppe von zweiten Netzknoten (P8, P9, ..., P14) in einer oder mehreren Datenbanken (DB) abgelegt sind, wobei über eine Datenbank-Abfrage (DB) die an das Datennetz gerichtete Dienste-Spezifikation verarbeitet wird.

3. Verfahren nach Anspruch 2, bei dem das oder die Datenbanken (DB) eine Peer-to-Peer-Datenbank umfassen.

4. Verfahren nach einem der vorhergehenden Ansprüche, bei dem die Ressourcen-Informationen statische und/oder dynamische Eigenschaften der jeweiligen ersten Netzknoten (P1, P2, ..., P7), insbesondere im Hinblick auf in den jeweiligen ersten Netzknoten (P1, P2, ..., P7) verfügbaren Speicherplatz und/oder verfügbare Rechenleistung und/oder verfügbare Daten und/oder verfügbare Programme, beschreiben.

5. Verfahren nach einem der vorhergehenden Ansprüche, bei dem der Regelsatz derart ausgestaltet ist, dass die Ausführung des oder der Dienste (SE1, SE2, ..., SE6) wenig Energie verbraucht.

6. Verfahren nach einem der vorhergehenden Ansprüche, bei dem bei der Ausführung des oder der Dienste (SE1, SE2, ..., SE6) erste Netzknoten (P1, P2, ..., P7) mit physikalisch entfernt voneinander angeordneter Hardware und/oder erste Netzknoten mit geringem Energieverbrauch bevorzugt eingesetzt werden.

7. Verfahren nach einem der vorhergehenden Ansprüche, bei dem die ausgewählte Dienstegruppe (SG) mehrere erste Netzknoten (P2, P3, P4) umfasst, welche zumindest einen Koordinatorknoten (P2) zur Koordinierung der Ausführung des oder der Dienste (SE1, SE2, ..., SE6) gemäß der Dienste-Spezifikation (SP) und zumindest einen ausführenden Netzknoten (P3) zur Ausführung des oder der Dienste (SE1, SE2, ..., SE6) beinhalten.

8. Verfahren nach Anspruch 7, bei dem die ausgewählte Dienstegruppe (SG) ferner zumindest einen Überwachungsknoten (P4) umfasst, der die Ausführung des oder der Dienste (SE1, SE2, ..., SE6) überwacht und die Aufgabe eines Koordinatorknotens (P2) oder eines ausführenden Netzknotens (P3) übernehmen kann, insbesondere bei Ausfall eines Koordinatorknotens (P2) oder eines ausführenden Netzknotens (P3).

9. Verfahren nach Anspruch 8, bei dem in dem zumindest einen Überwachungsknoten (P4) in regelmäßigen Abständen der aktuelle Rechenzustand des zumindest einen Koordinatorknotens (P2) und/oder des zumindest einen ausführenden Netzknotens (P3) hinterlegt wird.

10. Verfahren nach einem der vorhergehenden Ansprüche, bei dem die Dienstegruppe (SG) bei der Ausführung des oder der Dienste (SE1, SE2, ..., SE6) gemäß der Dienste-Spezifikation (SP) basierend auf einem oder mehreren Kriterien dynamisch veränderbar ist, wobei insbesondere die Ausführung eines Dienstes (SE1, SE2, ..., SE6) von einem ausführenden Netzknoten (P3) auf einen anderen Netzknoten übertragen wird, wenn der andere Netzknoten gemäß dem oder den Kriterien besser zur Ausführung des Dienstes (SE1, SE2, ..., SE6) geeignet ist.

11. Verfahren nach einem der vorhergehenden Ansprüche, bei dem das Datennetz auf einem Peer-to-Peer-Protokoll beruht, insbesondere auf einem Chord-Ring, auf dem die ersten und zweiten Netzknoten (P1, P2, ..., P14) des Datennetzes angeordnet sind.

12. Verfahren nach einem der vorhergehenden Ansprüche, bei dem die Ressourcen-Informationen in der zweiten Gruppe von zweiten Netzknoten (P8, P9, ..., P14) über ein Protokoll verteilt werden, insbesondere über ein auf Gossip basierendes Protokoll.

13. Verfahren nach einem der vorhergehenden Ansprüche, bei dem die Dienste-Spezifikation (SP) über eine Web-Service-Schnittstelle (WSI) an die zweite Gruppe von zweiten Netzknoten (P8, P9, ..., P14) gerichtet wird.

14. Verfahren nach einem der vorhergehenden Ansprüche, bei dem ein zur Ausführung eines Dienstes (SE1, SE2, ..., SE6) in der ausgewählten Dienstegruppe (SG) bestimmter Netzknoten (P3) Software-Code zur Ausführung des Dienstes (SE1, SE2, ..., SE6) von einem anderen Netzknoten lädt, falls er keinen Software-Code zur Ausführung des Dienstes (SE1, SE2, ..., SE6) enthält.

15. Verfahren nach einem der vorhergehenden Ansprüche, bei dem die im Datennetz ausgeführten Dienste (SE1, SE2, ..., SE6) OSGi-Services darstellen.

16. Dezentrales Datennetz zur Ausführung von Diensten, umfassend eine Vielzahl von Netzknoten (P1, P2, ..., P14), wobei eine erste Gruppe von ersten Netzknoten (P1, P2, ..., P7) und eine zweite Gruppe von zweiten Netzknoten (P8, P9, ..., P14) vorgesehen sind und im Betrieb des Datennetzes:

- Ressourcen-Informationen über die erste Gruppe von ersten Netzknoten (P1, P2, ..., P7) durch die zweite Gruppe von zweiten Netzknoten (P8, P9, ..., P14) bereitgestellt werden, wobei die Ressourcen-Informationen die in den jeweiligen ersten Netzknoten (P1, P2, ..., P7) verfügbaren Ressourcen zur Ausführung von Diensten (SE1, SE2, ..., SE6) spezifizieren;
- eine an das Datennetz gerichtete Dienste-Spezifikation (SP) von einem oder mehreren auszuführenden Diensten (SE1, SE2, ..., SE6) innerhalb der zweiten Gruppe von zweiten Netzknoten (P8, P9, ..., P14) derart verarbeitet wird, dass basierend auf den Ressourcen-Informationen eine Dienstegruppe (SG) umfassend zumindest einen ersten Netzknoten (P2, P3, P4) zur Ausführung des oder der Dienste (SE1, SE2, ..., SE6) gemäß der Dienste-Spezifikation (SP) ausgewählt wird, wobei die Dienste-Spezifikation (SP) eine Beschreibung der durch den oder die Dienste (SE1, SE2, ..., SE6) durchzuführenden Aufgabe und einen Regelsatz enthält, der eine oder mehreren Anforderungen an die zur Ausführung des oder der Dienste (SE1, SE2, ..., SE6) zu verwendende Dienstegruppe (SG) enthält;

- an die ausgewählte Dienstegruppe (SG) die Dienste-Spezifikation übergeben wird und der oder die Dienste (SE1, SE2, ..., SE6) gemäß der Dienste-Spezifikation durch die Dienstegruppe (SG) ausgeführt werden.

17. Datennetz nach Anspruch 16, welches derart ausgestaltet ist, dass in dem Datennetz ein Verfahren nach einem der Ansprüche 1 bis 15 durchführbar ist.

**Claims**

1. Method for executing services in a decentralised data network having a plurality of network nodes (P1, P2, ..., P14), in which:

   - resource information relating to a first group of one or a number of first network nodes (P1, P2, ..., P7) is provided by a second group of one or a number of second network nodes (P8, P9, ..., P14), wherein the resource information specifies the resources available in the respective first network nodes (P1, P2, ..., P7) for executing services (SE1, SE2, ..., SE6);
   - a service specification (SP) directed at the data network from one or a number of services (SE1, SE2, ..., SE6) to be executed is processed within the second group of second network nodes (P8, P9, ..., P14) such that, based on the resource information, a service group (SG) including at least one first network node (P3) is selected to execute the service(s) (SE1, SE2, ..., SE6) according to the service specification (SP), wherein the service specification (SP) contains a description of the task to be implemented by the service(s) (SE1, SE2, ..., SE6) and a control set, which contains one or a number of requirements on the service groups (SG) to be used to execute the service(s) (SE1, SE2, ..., SE6),
   - the service specification (SP) is transferred to the selected service group (SG) and the service(s) (SE1, SE2, ..., SE6) are executed according to the service specification by the service group (SG).

2. Method according to claim 1, in which the resource information is stored within the second group of second network nodes (P8, P9, ..., P14) in one or a number of databases (DB), wherein the service specification directed at the data network is processed via a database query (DB).

3. Method according to claim 2, in which the database(s) include(s) a peer-to-peer database.

4. Method according to one of the preceding claims, in which the resource information describes static and/or dynamic properties of the respective first network node (P1, P2, ..., P7), in particular in respect of storage space, computing power, data and/or programs available in the respective first network nodes (P1, P2, ..., P7) in each instance.

5. Method according to one of the preceding claims, in which the control set is embodied such that the service(s) (SE1, SE2, ..., SE6) is/are executed using little energy.

6. Method according to one of the preceding claims, in which first network nodes (P1, P2, ..., P7) with hardware and/or first network nodes arranged physically remote from one another are preferably used with little energy when the service(s) (SE1, SE2, ..., SE6) is/are executed.

7. Method according to one of the preceding claims, in which the selected service group (SG) includes a number of first network nodes (P2, P3, P4), which contain at least one coordinator node (P2) for coordinating the execution of the service(s) (SE1, SE2,..., SE6) according to the service specification (SP) and at least one network node (P3) to be executed for executing the service(s) (SE1, SE2, ..., SE6).

8. Method according to claim 7, in which the selected service group (SG) also includes at least one monitoring node (P4), which monitors the execution of the service(s) (SE1, SE2, ..., SE6) and assumes the task of a coordinator node (P2) or a network node (P3) to be executed, particularly upon failure of a coordinator node (P2) or a network node (P3) to be executed.

9. Method according to claim 8, in which the current computing state of the at least one coordinator node (P2) and/or of the at least one network node (P3) to be executed is stored in the at least one monitoring node (P4) at regular time intervals.

10. Method according to one of the preceding claims, in which the service group (SG), when executing the service(s) (SE1, SE2, ..., SE6) can be dynamically changed according to the service specification (SP) based on one or a number of criteria, wherein the execution of a service (SE1, SE2, ..., SE6) is transmitted from an executing network node (P3) to another network node, if the other network node according to the criterion/ia is better suited to executing the service (SE1, SE2, ..., SE6).

11. Method according to one of the preceding claims, in which the data network relates to a peer-to-peer protocol, in particular to a chord ring, on which the first and second network nodes (P1, P2, ..., P14) of the data network are arranged.

12. Method according to one of the preceding claims, in which the resource information in the second group is distributed from second network node (P8, P9, ..., P14) via a protocol, in particular via a gossip-based protocol.

13. Method according to one of the preceding claims, in which the service specification (SP) is directed at the second group of second network nodes (P8, P9, ..., P14) via a Web service interface (WS1).

14. Method according to one of the preceding claims, in which a network node (P3) determined to execute a service (SE1, SE2, ..., SE6) in the selected service group (SG) loads software codes for executing the service (SE1, SE2, ..., SE6) from another network node, if it contains no software code for executing the service (SE1, SE2, ..., SE6).

15. Method according to one of the preceding claims, in which the services (SE1, SE2, ..., SE6) executed in the data network represent OSGi services.

16. Decentralised data network for executing services, including a plurality of network nodes (P1, P2, ..., P14), wherein a first group of first network nodes (P1, P2, ..., P7) and a second group of second network nodes (P8, P9, ..., P14) are provided and during operation of the data network:

  - resource information relating to the first group of first network nodes (P1, P2, ..., P7) are provided by the second group of second network nodes (P8, P9, ..., P14), wherein the resource information specifies the resources for executing the services (SE1, SE2, ..., SE6) which are available in the respective first network node (P1, P2, ..., P7);
  - a service specification (SP) directed at the data network of one or a number of services (SE1, SE2, ..., SE6) to be executed is processed within the second group of second network nodes (P8, P9, ..., P14) such that based on the resource information, a service group (SG) including at least one first network node (P2, P3, P4) is selected to execute the service/s (SE1, SE2,..., SE6) according to the service specification (SP), wherein the service specification (SP) contains a description of the task to be implemented by the service(s) (SE1, SE2,..., SE6) and a control set, which contains one or a number of requirements on the service group (SG) to be used to execute the service(s) (SE1, SE2, ..., SE6);
  - the service specification is transferred to the selected service group (SG) and the service(s) (SE1, SE2, ..., SE6) are executed according to the service specification by the service group (SG).

17. Data network according to claim 16, which is embodied such that a method according to one of claims 1 to 15 can be implemented in the data network.

## Revendications

1. Procédé pour exécuter des services dans un réseau de données décentralisé avec une pluralité de noeuds de réseau (P1, P2, ..., P14), dans lequel :

  - des informations de ressources relatives à un premier groupe d'un ou de plusieurs premiers noeuds de réseau (P1, P2, ..., P7) sont mises à disposition par un deuxième groupe d'un ou de plusieurs deuxièmes noeuds de réseau (P8, P9, ..., P14), les informations de ressources spécifiant les ressources disponibles dans les premiers noeuds de réseau respectifs (P1, P2, ..., P7) pour l'exécution de services (SE1, SE2, ..., SE6) ;
  - une spécification de services (SP) adressée au réseau de données est traitée de manière telle, par un ou plusieurs services à exécuter (SE1, SE2, ..., SE6), dans le deuxième groupe de deuxièmes noeuds de réseau (P8, P9, ..., P14), que, sur la base des informations de ressources, un groupe de services (SG) comprenant au moins un premier noeud de réseau (P3) est sélectionné pour exécuter le ou les services (SE1, SE2, ..., SE6) conformément à la spécification de services (SP), la spécification de services (SP) contenant une description de la tâche à exécuter par le ou les services (SE1, SE2, ..., SE6) et un jeu de règles qui contient une ou plusieurs exigences applicables au groupe de services (SG) à utiliser pour l'exécution du ou des services (SE1, SE2, ..., SE6) ;
  - la spécification de services (SP) est remise au groupe de services sélectionné (SG) et le ou les services (SE1, SE2, ..., SE6) sont exécutés conformément à la spécification de services par le groupe de services (SG).

2. Procédé selon la revendication 1, dans lequel les informations de ressources sont, au sein du deuxième groupe de deuxièmes noeuds de réseau (P8, P9, ..., P14), déposées dans une ou plusieurs bases de données (DB), la spécification de services adressée au réseau de données étant traitée par l'intermédiaire d'une interrogation de base de données (DB).

3. Procédé selon la revendication 2, dans lequel la ou les bases de données (DB) incluent une base de données pair à pair.

4. Procédé selon l'une des revendications précédentes, dans lequel les informations de ressources décrivent des propriétés statiques et/ou dynamiques des premiers noeud de réseau respectifs (P1, P2, ..., P7), en particulier en ce qui concerne la place disponible en mémoire et/ou la puissance de calcul disponible et/ou des données disponibles et/ou des programmes disponibles dans les premiers noeuds de réseau respectifs (P1, P2, ..., P7).

5. Procédé selon l'une des revendications précédentes, dans lequel le jeu de règles est aménagé de manière telle que l'exécution du ou des services (SE1, SE2, ..., SE6) consomme peu d'énergie.

6. Procédé selon l'une des revendications précédentes, dans lequel sont préférentiellement utilisés, lors de l'exécution du ou des services (SE1, SE2, ..., SE6), des premiers noeuds de réseau (P1, P2, ..., P7) dont le matériel est disposé de manière physiquement distante l'un de l'autre et/ou des premiers noeuds de réseau avec une faible consommation d'énergie.

7. Procédé selon l'une des revendications précédentes, dans lequel le groupe de services sélectionné (SG) comprend plusieurs premiers noeuds de réseau (P2, P3, P4) qui contiennent au moins un noeud coordonnateur (P2) pour coordonner l'exécution du ou des services (SE1, SE2, ..., SE6) conformément à la spécification de services (SP) et au moins un noeud de réseau d'exécution (P3) pour exécuter le ou les services (SE1, SE2, ..., SE6).

8. Procédé selon la revendication 7, dans lequel le groupe de services sélectionné (SG) comprend additionnellement au moins un noeud de surveillance (P4) qui surveille l'exécution du ou des services (SE1, SE2, ..., SE6) et peut prendre en charge la tâche d'un noeud coordonnateur (P2) ou d'un noeud de réseau d'exécution (P3), en particulier en cas de défaillance d'un noeud coordonnateur (P2) ou d'un noeud de réseau d'exécution (P3).

9. Procédé selon la revendication 8, dans lequel l'état de calcul actuel de l'au moins un noeud coordonnateur (P2) et/ou de l'au moins un noeud de réseau d'exécution (P3) est déposé à intervalles réguliers dans l'au moins un noeud de surveillance (P4).

10. Procédé selon l'une des revendications précédentes, dans lequel le groupe de services (SG) peut être modifié dynamiquement lors de l'exécution du ou des services (SE1, SE2, ..., SE6) conformément à la spécification de services (SP) sur la base d'un ou de plusieurs critères, l'exécution d'un service (SE1, SE2, ..., SE6), en particulier, étant transférée d'un noeud de réseau d'exécution (P3) à un autre noeud de réseau lorsque l'autre noeud de réseau est, conformément au ou aux critères, mieux approprié pour exécuter le service (SE1, SE2, ..., SE6).

11. Procédé selon l'une des revendications précédentes, dans lequel le réseau de données repose sur un protocole pair à pair, et plus particulièrement sur un anneau de Chord sur lequel sont situés les premiers et deuxièmes noeuds de réseau (P1, P2, ..., P14) du réseau de données.

12. Procédé selon l'une des revendications précédentes, dans lequel les informations de ressources sont réparties dans le deuxième groupe de deuxièmes noeuds de réseau (P8, P9, ..., P14) par l'intermédiaire d'un protocole, et plus particulièrement par l'intermédiaire d'un protocole basé sur le gossip.

13. Procédé selon l'une des revendications précédentes, dans lequel la spécification de services (SP) est adressée au deuxième groupe de deuxièmes noeuds de réseau (P8, P9, ..., P14) via une interface de service Web (WSI).

14. Procédé selon l'une des revendications précédentes, dans lequel un noeud de réseau (P3) déterminé dans le groupe de services sélectionné (SG) pour exécuter un service (SE1, SE2, ..., SE6) charge un code logiciel pour l'exécution du service (SE1, SE2, ..., SE6) d'un autre noeud de réseau s'il ne contient pas de code logiciel pour l'exécution du service (SE1, SE2, ..., SE6).

15. Procédé selon l'une des revendications précédentes, dans lequel les services exécutés dans le réseau de données (SE1, SE2, ..., SE6) sont des services OSGi.

16. Réseau de données décentralisé pour exécuter des services, comprenant une pluralité de noeuds de réseau (P1, P2, ..., P14), un premier groupe de premiers noeuds de réseau (P1, P2, ..., P7) et un deuxième groupe de deuxièmes noeuds de réseau (P8, P9, ..., P14) étant prévus et, pendant le fonctionnement du réseau de données,

- des informations de ressources relatives au premier groupe de premiers noeuds de réseau (P1, P2, ..., P7) étant mises à disposition par le deuxième groupe de deuxièmes noeuds de réseau (P8, P9, ..., P14), les informations de ressources spécifiant les ressources disponibles dans les premiers noeuds de réseau respectifs (P1, P2, ..., P7) pour l'exécution de services (SE1, SE2, ..., SE6) ;

- une spécification de services (SP) adressée au réseau de données étant traitée de manière telle, par un ou plusieurs services à exécuter (SE1, SE2, ..., SE6), dans le deuxième groupe de deuxièmes noeuds de réseau (P8, P9, ..., P14), que, sur la base des informations de ressources, un groupe de services (SG) comprenant au moins un premier noeud de réseau (P2, P3, P4) est sélectionné pour exécuter le ou les services (SE1, SE2, ..., SE6) conformément à la spécification de services (SP), la spécification de services (SP) contenant une description de la tâche à exécuter par le ou les services (SE1, SE2, ..., SE6) et un jeu de règles qui contient une ou plusieurs exigences applicables au groupe de services (SG) à utiliser pour l'exécution du ou des services (SE1, SE2, ..., SE6) ;
- la spécification de services étant remise au groupe de services sélectionné (SG) et le ou les services (SE1, SE2, ..., SE6) étant exécutés conformément à la spécification de services par le groupe de services (SG).

**17.** Réseau de données selon la revendication 16, lequel est aménagé de manière telle qu'un procédé selon l'une des revendications 1 à 15 peut être exécuté dans le réseau de données.

# FIG 1

EP 2 178 267 B1

# FIG 2

EP 2 178 267 B1

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **EVREN AYORATE ; DR. AYSE BASAR BENER.** Super Peer Web Service Discovery Architecture. *ICDE 2007,* 01. April 2007
- **STEPHEN BOYD ; ARPITA GHOSH ; BALAJI PRABHAKAR ; DEVAVRAT SHAH.** Gossip algorithms: design, analysis and applications. *INFOCOM 2005, 24th Annual Joint Conference of the IEEE Computer and Communications Societies,* 13. Marz 2005

- A Generic Infrastructure for Decentralised Dynamic Loading of Platform-Specific Code. **RÜDIGER KAPITZA ; HOLGER SCHMIDT ; UDO BARTLANG ; FRANZ J. HAUCK.** Jadwiga Indulska and Kerry Raymond, editors, Distributed Applications and Interoperable Systems. Springer, 2007, vol. 4531, 323-336
- A Reconfigurable System Architecture for Consensus-Based Group Communication. **HANS P. REISER ; UDO BARTLANG ; FRANZ J. HAUCK.** Parallel and Distributed Computing and Systems (PDCS 2005. ACTA Press, 2005, 680-686